# EUROPÄISCHE PATENTSCHRIFT

(11) **EP 1 331 847 B1**
(45) Veröffentlichungstag und Bekanntmachung des Hinweises auf die Patenterteilung: **28.02.2007**
(21) Anmeldenummer: 01993399.3
(22) Anmeldetag: 04.10.2001
(51) Int. Cl.: A01M 1/02, A01M 1/20, A01M 1/14

(54) **VORRICHTUNG ZUM FANGEN VON FLUGINSEKTEN**
DEVICE FOR CATCHING FLYING INSECTS
DISPOSITIF POUR ATTRAPER DES INSECTES VOLANTS

(30) Priorität: 07.11.2000 DE 10055135
(43) Veröffentlichungstag der Anmeldung: 06.08.2003
(73) Patentinhaber: ECS Environment Care Systems GmbH, 56626 Andernach (DE)
(72) Erfinder: FELDHEGE, Michael, 56068 Koblenz (DE); ROREGER, Michael, 56567 Neuwied (DE); KLOCZKO, Malgorzata, 53577 Neustadt/Wied (DE)
(74) Vertreter: Schmidt, Werner
(86) Internationale Anmeldenummer: PCT/EP2001/011455
(87) Internationale Veröffentlichungsnummer: WO 2002/037958

(56) Entgegenhaltungen:
- EP-A- 0 281 562
- US-A- 5 022 179
- US-A- 5 608 988
- US-A- 5 778 636

## Beschreibung

Die vorliegende Erfindung ist auf eine Vorrichtung gerichtet, die zum Fangen von Fliegen und anderen Fluginsekten (Mücken, Wespen, Motten, Käfer etc.) geeignet ist.

Vorrichtungen zum Fangen von Fluginsekten sind seit langem bekannt, zum Beispiel Insekten-Leimringe und Fensterfliegenfallen nach Art der EP 281 562. Es existieren jedoch auch elektrisch betriebene Geräte unterschiedlicher Ausgestaltung, die unter Verwendung von UV-Leuchtstoffröhren in Kombination mit Hochspannungsgitter, Saugpropeller oder Klebetafeln Insekten anlocken und abtöten, Klebefallen mit gesonderten Lockstoffkapseln sowie Klebefallen, die Lichtreize unterschiedlicher Wellenlänge emittieren, beschrieben in den Dokumenten US 4,411,093, US 4,577,434, US 4,908,980, US 5,884,801, US 5,778,636, US 5,713,184, US 5,713,183, US 5,517,802, JP 8051909, FR 2 468 305 und EP 367 539.

US 5,022,179 offenbart eine Insektenfalle mit einem verlängerten, im Wesentlichen flachen Körper, der in drei Abschnitte unterteilt ist. Diese Abschnitte können durch Falten so voneinander abgewinkelt werden, dass der erste Abschnitt, der eine haftklebende Oberfläche aufweist, an ein Fenster geklebt werden kann. Zwischen dem zweiten Abschnitt, der bei der Anwendung der Insektenfalle senkrecht zur Fensterscheibe angeordnet ist und dem dritten Abschnitt, der aufwärts vom zweiten Abschnitt orientiert ist, wird ein Zwischenraum gebildet, in dem sich die Insekten verfangen können. Mit dem auf dem zweiten Abschnitt befindlichen Kleber werden die Insekten dauerhaft festgehalten. Die Herstellung dieser Insektenfalle wird nicht beschrieben.

Aufgabe der vorliegenden Erfindung ist es, eine einfach konstruierte, in der Herstellung kostengünstige und zugleich in der Bedienung anwenderfreundliche Fluginsektenfalle zur Verfügung zu stellen, die mit einem Minimum an technischem Aufwand (möglichst einteilig, ohne Verwendung elektrischer Komponenten) auskommt. Zugleich soll sie effizient im Anlocken und Einfangen von Fluginsekten sein.

Die erfindungsgemäße Vorrichtung umfasst einen flächenförmigen Träger (1), der eine erste Oberfläche (obere Seite, 2) und eine zweite Oberfläche (untere Seite, 3) besitzt. Auf der oberen Seite (2) ist eine Schicht (5) einer insektenanlockenden und / oder insektenhaftenden Substanz aufgetragen. Weiterhin besitzt die Vorrichtung entlang einer Längsseite des Trägers (1) eine Befestigungsvorrichtung (4). Diese Längsseite stellt die Begrenzungslinie zwischen Träger (1) und Befestigungsvorrichtung (4) dar. Sie liegt im unbeschichteten Randbereich der Seite (2). Mit Hilfe der Befestigungsvorrichtung kann die Vorrichtung während der Anwendung am Applikationsort angebracht werden. Dieser Applikationsort kann eine Wand, ein Spiegel, die Innenseite eines Kleiderschranks, eines Küchen- oder Vorratsschranks oder bevorzugt die Glasscheibe eines Fensters im Innenbereich eines Wohn- oder Geschäftsraums oder eines Fahrzeugs (PKW, Omnibus, Eisenbahnwagen) sein. Während der Anwendung der erfindungsgemässen Vorrichtung z. B. an einer Fensterscheibe wird den Fluginsekten eine im wesentlichen waagerechte, mit insektenanlockender und / oder insektenhaftender Substanz beschichtete Fläche dargeboten.

Unter _{"}im wesentlichen waagerecht" ist zu verstehen, dass die mit der Schicht (5) beschichtete Fläche während der Anwendung der Vorrichtung vorzugsweise parallel in Bezug auf den Horizont angeordnet ist. Es sollen aber auch Konstellationen erfasst sein, in denen diese Fläche relativ schräg in Bezug auf den Horizont stehen kann. Die Grenzen für eine "zulässige" Schrägstellung könnte bei einem Winkel unterhalb von 30° (gemessen zwischen der Ebene des Orts der Anwendung und der mit der insektenanlockenden und / oder insektenhaftenden Substanz beschichteten Seite (2) der Vorrichtung) liegen. Dieser Grenzwert ergibt sich daraus, dass das Risiko eines Verklebens von Seite (2) mit dem Anwendungsort (z. B. einer Fensterscheibe) mit abnehmenden Winkel zunimmt.

Bevorzugt sind daher Winkel oberhalb von 30°, besonders bevorzugt Winkel zwischen 45° und 145°, ganz besonders bevorzugt Winkel zwischen 60° und 120°. Da der Anwendungsort in den meisten Fällen eine vertikal angeordnete Ebene darstellen wird, ergibt sich aus den oben genannten Winkeln eine "im wesentlichen waagerechte" Anordnung der beschichteten Ebene (2) - also nicht nur im Idealfall, wenn ein 90°-Winkel zwischen Anwendungsort und der beschichteten Ebene (2) vorliegt.

Das Material, aus dem der flächenförmige Träger (1) besteht kann lichtundurchlässig sein. Zu diesen Materialien zählen zum Beispiel Karton, Kartonpapier etc. oder pigmenthaltige Kunststoffe wie Polypropylen, Polystyrol, Polyester etc. sowie Verbundmaterialien aus diesen Werkstoffen, zum Beispiel ein Laminat aus Kartonpapier und Polyester. Das Material ist aber vorzugsweise lichtdurchlässig. Damit ist auch der Fall gemeint, dass keine vollständige Absorption bzw. Transmission des Lichts erfolgt, sondern gegebenenfalls nur bestimmte Wellenlängenbereiche absorbiert werden, so dass der Träger farbig und unter Umständen auch dann noch weitgehend transparent erscheint. Die Verwendung eines farbigen flächenförmigen Trägers kann dann vorteilhaft sein, wenn bestimmte Fluginsekten auf derartige optische Signale reagieren, wie dies zum Beispiel bei Hausfliegen, Speisemotten, Wespen und bestimmten Käferarten wie dem Brotkäfer der Fall ist.

Besonders bevorzugt sind jedoch farblose und transparente Materialien. Hierzu zählen Glas und Kunststoffe wie Polypropylen, Polystyrol, Polyester, Polyacrylnitril, Ethylen-Vinylacetat-Polymere, Polyisobutylen, Polyvinylchlorid, Polyethylenterephthalat, Polyacrylat etc.

Als Kunststoffe kommen insbesondere bahnförmige, polyesterhaltige Materialien in Frage, da diese auch bei geringen Materialstärken eine noch ausreichende Produktsteifigkeit und Formstabilität bei vorteilhafter Plastizität aufweisen.

In bestimmten Ausführungsformen können sich geometrische Muster (regelmäßig oder unregelmäßig angebrachte Streifen, Karos, Linien und dergl.) auf der Seite des flächenförmigen Trägers befinden, die mit der insektenanlockenden und / oder insektenhaftenden Substanz ausgerüstet ist. Solche Muster, die auf bestimmte Fluginsekten eine anziehende Wirkung besitzen, sind dem Fachmann bekannt und zum Beispiel in EP 475 665, EP 446 464, WO 97/01272 und WO 98/42186 beschrieben. Es kann sich bei diesen Mustern zum Beispiel um schwarz-weiße Rechtecke, um Imitationen von Blüten oder um Abbildungen der Zielinsekten handeln.

Unter einer insektenanlockenden Substanz im Sinne der vorliegenden Beschreibung sind Insektenlockstoffe oder Sexual- bzw. Aggregationspheromone und deren Kombinationen zu verstehen. Sie sind dem Fachmann bekannt wie zum Beispiel das Sexualpheromon der Hausfliege (Z)-9-Tricosene oder das der Speisemotte Z,E-9,12-Tetradecadienylacetat (TDA), die zum Beispiel bei Bedoukian Research in Danbury, USA oder Shin-Etsu in Tokyo, Japan zu beziehen sind. Aber auch Melasse, Sirup, Honig und Malz, zuckerhaltige Stoffgemische sowie geruchsaktive Stoffe und Fraßstimulantien können als insektenanlockende Substanz im Sinne dieser Erfindung betrachtet werden.

Unter einer insektenhaftenden Substanz im Sinne der vorliegenden Beschreibung sind haftklebende Substanzen zu verstehen, die ein Anhaften der Insekten auf der damit beschichteten Seite der Vorrichtung in einer Weise bewirken, dass ein Davonfliegen des Fluginsekts verhindert wird. Diese Stoffe sind dem Fachmann bekannt. Dazu zählen zum Beispiel aus der Stoffgruppe der haftklebenden Polymere Polyisobutylene und Polyacrylate, wie z. B. Mischpolymerisate aus Acrylsäure und Acrylsäureestern, insbesondere Acrylsäurealkylester wie 2-Ethylhexylacrylat oder n-Butylacrylat. Bei nicht haftklebenden Copolymerisaten wie zum Beispiel Polystyrolisoprenstyrol, Polystyrolbutadienstyrol, Polyethylenvinylacetat und Polyethylenacrylsäureester müssen zur Erzielung der gewünschten Eigenschaften geeignete Hilfsstoffe, sogenannte Klebrigmacher zugesetzt werden. Hierzu dienen insbesondere harzartige Stoffe wie Kolophonium und dessen Derivate, Polyterpene und Kohlenwasserstoffharze.

Die insektenanlockende und / oder die insektenhaftende Substanz ist auf mindestens einer Oberfläche des flächenförmigen Trägers aufgebracht, und zwar in Schichtform. Dies kann dadurch erfolgen, dass diese Substanz(en) direkt (zum Beispiel durch Extrusion) oder gegebenenfalls in einer geeigneten Hilfssubstanz gelöst bzw. suspendiert auf der betreffenden Seite des flächenförmigen Trägers aufgetragen wird. Gegenebenfalls wird die Hilfssubstanz (zum Beispiel ein Lösungsmittel) anschließend entfernt (zum Beispiel durch Verflüchtigung des Lösemittels).

Die insektenanlockende und / oder die insektenhaftende Substanz kann aber auch in Form eines zuvor hergestellten Ein-, Zwei- oder Mehrschichtlaminats auf die mindestens eine Oberfläche des flächenförmigen Trägers aufgebracht werden.

Die Befestigungsvorrichtung (4) kann eine Materialleiste sein, die aus demselben Material besteht wie der Träger (1) und welche mit einem Haftkleberstreifen (7) versehen ist. Die Befestigungsvorrichtung (4) kann separat an dem Träger (1) angebracht werden, ist jedoch vorteilhafterweise durch Umknicken entlang einer Längsseits des Trägers (1) herstellbar. Dadurch entstehen am Träger (1) zwei parallel verlaufende, einander gegenüberliegende Längsseiten (6), von denen dann eine die Begrenzungslinie zwischen Träger (1) und Befestigungsvorrichtung (4) darstellt.

Die Herstellung einer erfindungsgemässen Vorrichtung zum Fangen von Fluginsekten, welche einen flächenförmigen Träger mit einer oberen Seite, einer unteren Seite und eine Befestigungsvorrichtung umfasst, kann vorteilhaft unter Verwendung einer geeigneten flächenförmigen Materialbahn durch die Schritte a) Beschichten von mindestens einer Oberfläche der flächenförmigen Materialbahn mit einer insektenanlockenden und / oder insektenhaftenden Substanz, wobei mindestens ein Randbereich dieser Oberfläche der flächenförmigen Materialbahn unbeschichtet bleibt, b) Abdecken der beschichteten Oberfläche mit einer wieder abziehbaren Schutzfolie, c) Umknicken des unbeschichteten Randbereichs der flächenförmigen Materialbahn um einen Betrag zwischen etwa 30 und etwa 150 Grad, vorzugsweise etwa 90 Grad (jeweils entweder nach oben oder unten in Bezug auf die Ebene der beschichteten Oberfläche), wobei eine Materialleiste entsteht, welche vorzugsweise dauerhaft von der Ebene der beschichteten Oberfläche absteht, d) Auftragen eines Haftklebers oder eines doppelseitigen Klebebandes auf einer der Seiten dieser Materialleiste und e) Abdecken des Haftklebers oder des doppelseitigen Klebebandes mit einer wieder abziehbaren Schutzfolie erfolgen. Einzelne Vorrichtungen erhält man durch Vereinzeln von Abschnitten (z. B. durch Querschneiden) der jeweils mit wieder abziehbaren Schutzfolien versehenen, mit mindestens einseitig beschichteter Oberfläche und mit einer mit Haftkleber oder einem doppelseitigen Klebeband ausgerüsteten Materialleiste ausgestatteten flächenförmigen Materialbahn und Verpacken von mehreren, vorzugsweise vier dieser Abschnitte in einem Siegelrand- oder Schlauchbeutel.

Durch das Umknicken gemäss Schritt c) in einem von 90 Grad abweichenden Winkel kann gegebenenfalls berücksichtigt werden, dass der Applikationsort selbst eine Fensterscheibe darstellt, die nicht senkrecht, sondern in einem bestimmten Winkel zur Erdoberfläche orientiert ist. Hier kommen als vorgesehene Applikationsorte zum Beispiel schräge Fenster im Dachbereich von Wohnungen oder Auslagevitrinen in Verkaufsräumen in Betracht. Durch ein entsprechend angepasstes, zum Beispiel stärkeres Umknicken kann die Schräge des vorgesehenen Applikationsort in einer Weise kompensiert werden, dass während der Anwendung der Vorrichtung die mit insektenanlockender und / oder insektenhaftender Substanz beschichtete Fläche im wesentlichen waagerecht zur Erdoberfläche angeordnet ist.

Aufgrund der Materialeigenschaften der Trägers (Produktsteifigkeit, Formstabilität, Plastizität) kann das einmal durchgeführte Umknicken gemäß Schritt c) insoweit wieder rückgängig gemacht werden, dass die Vorrichtungen im wesentlichen eben sind. Dies hat Vorteile beim Verpacken der Vorrichtungen. Erst kurz vor Anwendung der Vorrichtung wird durch erneutes, manuelles Umknicken seitens des Anwenders der endgültige Winkel zwischen Träger (1) und Befestigungsvorrichtung (4) eingestellt. Dies ist aufgrund des bereits einmal erfolgten (maschinellen) Umknickens dann wesentlich leichter möglich.

Beim Beschichten der Materialleiste wird die Klebesubstanz (der Haftkleber) oder das doppelseitige Klebeband vorzugsweise auf der Seite der Materialleiste aufgetragen, die jeweils von der Ebene der beschichteten Oberfläche wegzeigt. Vorzugsweise wird die erste (d. h. die obere) Seite des flächenförmigen Trägers, Oberfläche (2) mit der insektenanlockenden und / oder der insektenhaftenden Substanz beschichtet und mit Schutzfolie abgedeckt und dann der unbeschichtete Randbereich z. B. um 90 Grad nach unten umgeknickt. Die von der beschichteten Oberfläche wegzeigende Seite der Materialleiste ist dann die, die zuvor ein Teil der oberen Seite (2) darstellte.

Die genannten Verfahrensschritte können auch in abweichender Reihenfolge ausgeführt werden, beispielsweise in der Reihenfolge a), b), d), e), c) oder a), d), b), e), c).

Anstelle der durch beim Umknicken gemäß Schritt c) entstehenden Knickkante kann auch entlang der Begrenzungslinie zwischen Träger (1) und Befestigungsvorrichtung (4) eine Schwächungslinie (Einkerbung) oder eine Perforation (kleine Materialaussparungen) eingebracht werden. In diesem Fall ist kein maschinellen Umknicken erforderlich, sondern "lediglich" das vom Anwender später durchzuführende, manuelle Umknicken. Auf jeden Fall ist durch diese Begrenzungslinie eine Unterscheidung zwischen Träger (1) und Befestigungsvorrichtung (4) klar erkennbar, insbesondere dann, wenn diese beiden Elemente der Vorrichtung aus demselben Körper bestehen.

Wenn Träger (1) und Befestigungsvorrichtung (4) aus demselben Körper geformt werden, ist aber in jedem Fall die Erzeugung einer solchen Begrenzungslinie zwischen diesen Konstruktionselementen - vorzugsweise in dem unbeschichteten Randbereich der Seite (2) - erforderlich.

Erste Vergleichsversuche zwischen der erfindungsgemässen Vorrichtung zum Fangen von Fluginsekten und einer Fensterfliegenfalle aus dem Stand der Technik, wie sie in EP 281 562 beschrieben sind, zeigten, dass bei ansonsten vergleichbaren Bedingungen (Anbringung beider Fallen in räumlicher Nähe auf derselben Fensterscheibe im selben Zimmer, Fangfläche in gleicher Größenordnung, gleiche Anwendungsdauer) mit der erfindungsgemässen Vorrichtung eine höhere Zahl von Fluginsekten gefangen werden konnte.

Dies ist vermutlich zum Teil darauf zurückzuführen, dass die im wesentlichen waagerechte, mit insektenanlockender und / oder insektenhaftender Substanz beschichtete Fläche, die den Fluginsekten durch die erfindungsgemässe Vorrichtung bei deren Anwendung dargeboten wird, gern von den Fluginsekten als _{"}Landebahn" benutzt wird. Damit ist gezeigt, dass die Aufgabe auf überraschend einfache und zugleich mit unerwartet wirksamer Insektenfangwirkung gelöst wurde.

### Beispiel 1: Vergleichende Versuche zur Effizienz von Fenster-Fliegenklebefallen

Zur Ermittlung der Effizienz der erfindungsgemäßen Vorrichtung im Vergleich zu kommerziell erhältlichen Fenster-Fliegenklebefallen wurden Fliegenfangversuche durchgeführt. Für diesen Zweck wurden in einem Privathaushalt vier Fensterflächen über einen Zeitraum von insgesamt vier Wochen mit je einem Exemplar einer erfindungsgemäßen Vorrichtung bzw. einer kommerziell erhältlichen Fenster-Fliegenklebefalle bestückt. Um Artefakte auszuschließen, wurden diese vier Exemplare wochenweise rotiert, d. h. jeweils auf eine andere Fensterfläche angebracht.

Als erfindungsgemäße Vorrichtungen wurden Muster verwendet, bei denen das Trägermaterial aus farblosem bzw. gelb eingefärbtem Kunststoff bestand. Die Anbringung erfolgte vertikal bzw. im wesentlichen horizontal. Zum Vergleich wurde die in Deutschland unter dem Markennamen "Silva Fensterfliegenfalle" der schwedischen Firma Silvandersson Miljö AB, Knäred, ein durchsichtiger Leimstreifen, der direkt am Fenster befestigt wird und die Insekten anlockt, eingesetzt. Die Klebefläche liegt bei diesem Produkt während der Anbringung vertikal vor. Die Klebeflächen aller verwendeten Exemplare waren praktisch gleich.

Die Fangergebnisse sind in der folgenden Tabelle wiedergegeben:

| | Kunststoffträger farblos, vertikal | Kunststoffträger farblos, horizontal | Kunststoffträger gelb, vertikal | "Silva Fensterfliegenfalle" |
|---|---|---|---|---|
| Woche 1 | 26 | 30 | 7 | 26 |
| Woche 2 | 10 | 57 | 6 | 39 |
| Woche 3 | 8 | 3 | 4 | 7 |
| Woche 4 | 15 | 29 | 8 | 26 |
| Summe | 59 | 119 | 25 | 98 |

Angegeben sind die innerhalb einer Woche gefangenen "Fliegen". Darunter sind jeweils größere Fluginsekten zu verstehen, die von der Durchschnittsbevölkerung (Endverbraucher) als Stubenfliegen bezeichnet werden würden, wissenschaftlich gesehen jedoch nicht mit Musca domestica gleichzusetzen sind. Kleinere Fluginsekten sind nicht gezählt worden.

Wie sich zeigt, sind alle Vorrichtungen zum Fangen von Fluginsekten befähigt. Aufgrund der horizontalen Anbringung der Vorrichtung ist jedoch eine wesentlich höhere Fangquote zu erzielen als durch ein vergleichbares, kommerziell erhältliches Produkt. Die Steigerung der Fangquote liegt gegenüber dem kommerziell erhältlichen Produkt bei etwa 20%. (Wenn das Fangergebnis der dritten Woche unberücksichtigt bleibt, das auf kühle Witterung und geringes Flugaufkommen zurückzuführen ist, beträgt die Steigerung 27%.)

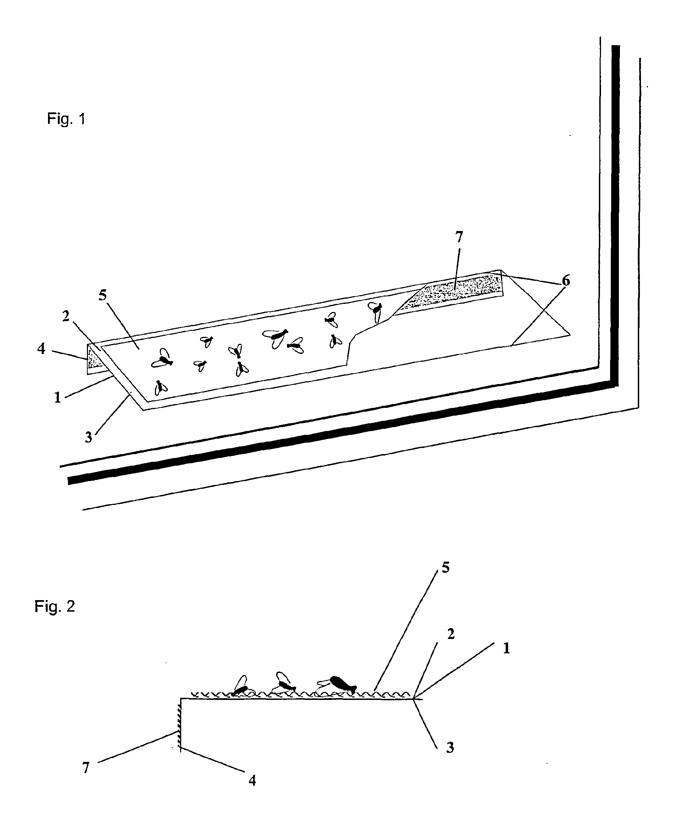

Fig. 1 zeigt eine räumliche Vorrichtung zum Fangen von Fluginsekten, die an der Innenseite einer senkrechten Fensterscheibe angebracht ist. Die Vorrichtung selbst besitzt in dieser Ausführungsform eine rechteckige Ausgestaltung.
Fig. 2 zeigt eine Vorrichtung zum Fangen von Fluginsekten von der Seite, die an einer senkrechten Wand angebracht ist.

In den Figuren haben die Bezugszeichen folgende Bedeutung:
(1) flächenförmiger Träger (Fallenkörper)
(2) erste Oberfläche, (Oberseite des Trägers), als Insektenfangfläche ausgerüstet
(3) zweite Oberfläche (Unterseite des Trägers), unbeschichtet
(4) Befestigungsvorrichtung (Materialleiste)
(5) insektenanlockende und / oder insektenhaftende Substanz enthaltende Schicht; wobei der zur Befestigungsvorrichtung (4) weisende Randbereich unbeschichtet ist
(6) zwei parallele, einander gegenüberliegende Längsseiten des flächenförmigen Trägers
(7) Haftklebestreifen auf abgewandter Seite der Materialleiste

## Patentansprüche

1. Vorrichtung zum Fangen von Fluginsekten, umfassend einen flächenförmigen Träger (1) mit einer oberen Seite (2), die mit einer insektenanlockenden und / oder einer insektenhaftenden Substanz (5) beschichtet ist, einer unteren Seite (3), und einer Befestigungsvorrichtung (4) entlang einer Längsseite des Trägers (1), wobei diese Längsseite die Begrenzungslinie zwischen Träger (1) und Befestigungsvorrichtung (4) darstellt, **dadurch gekennzeichnet, dass** diese Begrenzungslinie im unbeschichteten Randbereich der Seite (2) liegt.

2. Vorrichtung nach Anspruch 1, **dadurch gekennzeichnet, dass** der flächenförmige Träger (1) aus einem lichtundurchlässigen Material aus der Gruppe bestehend aus Karton, Kartonpapier, pigmenthaltige Kunststoffe und deren Verbundmaterialien oder aus einem lichtdurchlässigen Material besteht, welches farbig oder farblos ist.

3. Vorrichtung nach Anspruch 1 oder 2, **dadurch gekennzeichnet, dass** der flächenförmige Träger (1) im wesentlichen starr und / oder formstabil ist.

4. Vorrichtung nach einem oder mehreren der Ansprüche 1 bis 3, **dadurch gekennzeichnet, dass** der flächenförmige Träger (1) aus Kunststoff besteht, vorzugsweise aus Polypropylen, Polystyrol, Polyester, Polyacrylnitril, Ethylen-Vinylacetat-Polymer, Polyisobutylen, Polyvinylchlorid, Polyethylenterephthalat oder Polyacrylat, und besonders bevorzugt aus einem Polymer auf der Basis von Polyester oder Polyesterverbundmaterial.

5. Vorrichtung nach einem oder mehreren der Ansprüche 1 bis 4, **dadurch gekennzeichnet, dass** der flächenförmige Träger (1) ein geometrisches Muster aufweist.

6. Vorrichtung nach einem oder mehreren der Ansprüche 1 bis 5, **dadurch gekennzeichnet, dass** der flächenförmige Träger (1) rechteckig ist und zwei parallele, einander gegenüberliegende Längsseiten (6) besitzt.

7. Vorrichtung nach einem oder mehreren der Ansprüche 1 bis 6, **dadurch gekennzeichnet, dass** die Befestigungsvorrichtung (4) im wesentlichen senkrecht zu der mit der insektenanlockenden und / oder insektenhaftenden Substanz beschichteten oberen Seite (2) des Trägers angeordnet ist und einen auf der dem flächenförmigen Träger abgewandten Seite der Materialleiste angebrachten Haftklebstreifen (7) umfasst.

8. Vorrichtung nach einem oder mehreren der Ansprüche 1 bis 7, **dadurch gekennzeichnet, dass** die am Träger (1) angebrachte Befestigungsvorrichtung (4) aus demselben Material wie der flächenförmige Träger (1) besteht.

9. Vorrichtung nach einem oder mehreren der Ansprüche 1 bis 8, **dadurch gekennzeichnet, dass** die am flächenförmigen Träger (1) angebrachte Befestigungsvorrichtung (4) durch Umknicken eines unbeschichteten Randbereichs des flächenförmigen Trägers (1) herstellbar ist, der an einer der Längsseiten verläuft.

10. Vorrichtung nach einem oder mehreren der Ansprüche 1 bis 9, **dadurch gekennzeichnet, dass** die insektenanlockenden Substanz ein Stoff oder eine Kombination von Stoffen aus der Gruppe umfassend Sexualpheromone, Aggregationspheromone, Fraßstimulantien und Geruchslockstoffe ist.

11. Vorrichtung nach einem der Ansprüche 1 bis 10, **dadurch gekennzeichnet, dass** die insektenhaftende Substanz ein Stoff oder eine Kombination von Stoffen aus der Gruppe der haftklebenden Substanzen ist, die ein Davonfliegen eines daran anhaftenden Fluginsekts wirksam verhindert.

12. Verfahren zur Herstellung einer Vorrichtung zum Fangen von Fluginsekten, welche einen flächenförmigen. Träger (1) mit einer oberen Seite (2), einer unteren Seite (3) und eine Befestigungsvorrichtung (4) umfasst, **gekennzeichnet durch** die Schritte:
a) Beschichten von mindestens einer Oberfläche einer flächenförmigen Materialbahn mit einer eine insektenanlockende und / oder einer insektenhaftende Substanz enthaltenden Masse, wobei ein Randbereich dieser Oberfläche der flächenförmigen Materialbahn unbeschichtet bleibt,
b) Abdecken der beschichteten Oberfläche mit einer wieder abziehbaren Schutzfolie,
c) Einbringen einer Begrenzungslinie in den unbeschichteten Randbereich der flächenförmigen Materialbahn, wobei eine Materialleiste entsteht, welche befähigt ist, dauerhaft von der Ebene der beschichteten Oberfläche abzustehen,
d) Auftragen eines Haftklebers oder eines doppelseitigen Klebebandes auf eine der Seiten der Materialleiste,
e) Abdecken des Haftklebers oder des doppelseitigen Klebebandes mit einer wieder abziehbaren Schutzfolie.

13. Verfahren nach Anspruch 12, **dadurch gekennzeichnet, dass** das Einbringen der Begrenzungslinie durch Umknicken, Einkerben oder Perforieren erfolgt.

14. Verfahren nach Anspruch 12 oder 13, **dadurch gekennzeichnet, dass** der Haftkleber oder das doppelseitige Klebeband auf der Seite der Materialleiste aufgetragen wird, die jeweils von der Ebene der beschichteten Oberfläche wegzeigt.

15. Verfahren nach einem oder mehreren der Ansprüche 12 bis 14, **dadurch gekennzeichnet, dass** das Einbringen einer Begrenzungslinie nach mindestens einem der Schritte a), b), e) oder d) erfolgt.

16. Verfahren nach einem oder mehreren der Ansprüche 12 bis 15, **dadurch gekennzeichnet, dass** Abschnitte der jeweils mit wieder abziehbaren Schutzfolien versehenen, mit mindestens einseitig beschichteter Oberfläche und mit einer mit Haftkleber oder einem doppelseitigen Klebeband ausgerüsteten Materialleiste ausgestatteten flächenförmigen Materialbahn durch Querschneiden oder Stanzen vereinzelt werden.

## Claims

1. Device for catching flying insects, comprising a planar support (1) having an upper side (2), which is coated with a substance (5) which attracts insects and/or to which insects stick, and having a lower side (3) and a fastening device (4) along a longitudinal side of the support (1), this longitudinal side representing the delimiting line between support (1) and fastening device (4), **characterized in that** this delimiting line is situated in the uncoated edge region of the side (2).

2. Device according to Claim 1, **characterized in that** the planar support (1) consists of a translucent material selected from the group comprising, board, cardboard, pigment -containing plastics and their composite materials or of a translucent material which is colored or colorless.

3. Device according to Claim 1 or 2, **characterized in that** the planar support (1) is substantially rigid and/or dimensionally stable.

4. Device according to one or more of Claims 1 to 3, **characterized in that** the planar support (1) consists of plastic, preferably polypropylene, polystyrene, polyester, polyacrylonitrile, ethylene-vinyl acetate polymer, polyisobutylene, polyvinyl chloride, polyethylene terephthalate or polyacrylate, and particularly preferably a polymer based on polyester or polyester composite material.

5. Device according to one or more of Claims 1 to 4, **characterized in that** the planar support (1) has a geometrical pattern.

6. Device according to one or more of Claims 1 to 5, **characterized in that** the planar support (1) is rectangular and has two parallel longitudinal sides (6), lying opposite each other.

7. Device according to one or more of Claims 1 to 6, **characterized in that** the fastening device (4) is arranged substantially perpendicularly to the upper side (2) of the support which is coated with the substance which attracts insects and/or to which insects stick and comprises a strip of adhesive (7) provided on the side of the material strip facing away from the planar support.

8. Device according to one or more of Claims 1 to 7, **characterized in that** the fastening device (4) attached to the support (1) consists of the same material as the planar support (1).

9. Device according to one or more of Claims 1 to 8, **characterized in that** the fastening device (4) attached to the planar support (1) can be produced by folding over an uncoated edge region of the planar support (1), which runs on one of the longitudinal sides.

10. Device according to one or more of Claims 1 to 9, **characterized in that** the substance which attracts insects is a substance or combination of substances from the group comprising sexual pheromones, aggregation pheromones, feedants and pheromone attractants.

11. Device according to one of Claims 1 to 10, **characterized in that** the substance which attracts insects is a substance or combination of substances from the group of adhesive substances which effectively prevents a flying insect sticking to it from flying away again.

12. Method of producing a device for catching flying insects which comprises a planar support (1) with an upper side (2), a lower side (3) and a fastening device (4), **characterized by** the steps of:
a) coating at least one surface of a planar material sheet with a composition containing a substance which attracts insects and/or to which insects stick, an edge region of this surface of the planar material sheet remaining uncoated,
b) covering the coated surface with a protective film which can be pulled off again,
c) introducing a delimiting line into the uncoated edge region of the planar material sheet, producing a material strip which is enabled to protrude permanently from the plane of the coated surface,
d) applying adhesive or a double-sided adhesive tape to one of the sides of the material strip,
e) covering the adhesive or the double-sided adhesive tape with a protective film which can be pulled off again.

13. Method according to Claim 12, **characterized in that** the introduction of the delimiting line is performed by folding over, notching or perforating.

14. Method according to Claim 12 or 13, **characterized in that** the adhesive or the double-sided adhesive tape is applied to the side of the material strip which respectively faces away from the plane of the coated surface.

15. Method according to one or more of Claims 12 to 14, **characterized in that** the introduction of a delimiting line is performed after at least one of steps a), b), e) or d).

16. Method according to one or more of Claims 12 to 15, **characterized in that** portions of the planar material sheet respectively provided with protective films which can be pulled off again, provided with a coated surface at least on one side and with a material strip provided with adhesive or a double-sided adhesive tape are cut up by crosscutting or punching.

## Revendications

1. Dispositif pour attraper des insectes volants, comprenant un support planiforme (1) avec une face supérieure (2) qui est enduite d'une substance (5) attirant les insectes et/ou adhérant à ceux-ci, une face inférieure (3) et un dispositif de fixation (4) le long d'un côté longitudinal du support (1), ce côté longitudinal représentant la ligne de délimitation entre le support (1) et le dispositif de fixation (4), **caractérisé en ce que** cette ligne de délimitation se situe dans la zone marginale non enduite de la face (2).

2. Dispositif selon la revendication 1, **caractérisé en ce que** le support planiforme (1) est constitué d'un matériau opaque du groupe comprenant le carton, le papier cartonné, les matières plastiques pigmentées et leurs matériaux composites, ou d'un matériau transparent qui est coloré ou non coloré.

3. Dispositif selon la revendication 1 ou 2, **caractérisé en ce que** le support planiforme (1) est essentiellement rigide et/ou indéformable.

4. Dispositif selon une ou plusieurs des revendications 1 à 3, **caractérisé en ce que** le support planiforme (1) est en matériau plastique, de préférence en polypropylène, polystyrène, polyester, polyacrylonitrile, polymère éthylène-acétate de vinyle, polyisobutylène, chlorure de polyvinyle, polyéthylènetéréphtalate ou polyacrylate, et de façon particulièrement préférée dans un polymère sur la base du polyester ou de matériau composite en polyester.

5. Dispositif selon une ou plusieurs des revendications 1 à 4, **caractérisé en ce que** le support planiforme (1) présente un motif géométrique.

6. Dispositif selon une ou plusieurs des revendications 1 à 5, **caractérisé en ce que** le support planiforme (1) est rectangulaire et possède deux côtés longitudinaux (6) parallèles opposés l'un à l'autre.

7. Dispositif selon une ou plusieurs des revendications 1 à 6, **caractérisé en ce que** le dispositif de fixation (4) est disposé essentiellement perpendiculairement à la face supérieure (2) du support qui est recouverte de la substance attirant les insectes et/ou adhérant aux insectes, et comprend une bande de colle adhésive (7) appliquée sur la face opposée au support planiforme du bandeau de matériau.

8. Dispositif selon une ou plusieurs des revendications 1 à 7, **caractérisé en ce que** le dispositif de fixation (4) appliqué sur le support (1) est constitué du même matériau que celui du support planiforme (1).

9. Dispositif selon une ou plusieurs des revendications 1 à 8, **caractérisé en ce que** le dispositif de fixation (4) appliqué sur le support planiforme (1) peut être fabriqué en repliant une zone marginale non enduite du support planiforme (1), qui s'étend sur un des côtés longitudinaux.

10. Dispositif selon une ou plusieurs des revendications 1 à 9, **caractérisé en ce que** la substance attirant les insectes est une substance ou une combinaison de substances du groupe comprenant les phéromones sexuelles, les phéromones grégaires, les stimulants nutritifs et les substances olfactives.

11. Dispositif selon une des revendications 1 à 10, **caractérisé en ce que** la substance adhérant aux insectes est une substance ou une combinaison de substances du groupe des substances adhésives, groupe qui empêche efficacement l'envol d'un insecte volant ayant adhéré à cette substance.

12. Procédé de fabrication d'un dispositif pour attraper des insectes volants, comprenant un support planiforme (1) avec une face supérieure (2), une face inférieure (3) et un dispositif de fixation (4), **caractérisé par** les étapes suivantes :
a) revêtement d'au moins une surface d'une bande de matériau planiforme avec une masse contenant une substance attirant les insectes et/ou adhérant aux insectes, une zone marginale de cette surface de bande de matériau planiforme demeurant non enduite,
b) recouvrement de la surface enduite par un film de protection pelliculable,
c) pose d'une ligne de délimitation dans la zone marginale non enduite de la bande de matériau planiforme, ce qui produit un bandeau de matériau qui est capable d'être éloigné durablement du plan de la surface enduite,
d) application d'une colle adhésive ou d'une bande adhésive double face sur un des côtés du bandeau de matériau,
e) recouvrement de la colle adhésive ou de la bande adhésive double face par un film de protection pelliculable.

13. Procédé selon la revendication 12, **caractérisé en ce que** la pose de la ligne de délimitation est effectuée par repliage, rainurage ou perforation.

14. Procédé selon la revendication 12 ou 13, **caractérisé en ce que** la colle adhésive ou la bande adhésive double face est appliquée sur la face du bandeau de matériau qui est éloignée respectivement du plan de la surface enduite.

15. Procédé selon une ou plusieurs des revendications 12 à 14, **caractérisé en ce que** la pose d'une ligne de délimitation a lieu selon au moins une des étapes a), b), e) ou d).

16. Procédé selon une ou plusieurs des revendications 12 à 15, **caractérisé en ce que** des tronçons de la feuille de matériau planiforme respectivement munis de films de protection pelliculables, avec une surface enduite au moins sur un côté et avec une bande de matériau munie d'adhésif ou d'une bande adhésive double face, sont séparés par découpe ou perforation.
